## Europäisches Patentamt
## European Patent Office
## Office européen des brevets

(11) Publication number: **0 116 584**
**B1**

(12) **EUROPEAN PATENT SPECIFICATION**

(45) Date of publication of patent specification: **13.06.90**

(51) Int. Cl.⁵: **G 01 K 11/12**

(21) Application number: **83902623.4**

(22) Date of filing: **29.07.83**

(86) International application number:
**PCT/US83/01155**

(87) International publication number:
**WO 84/00608 16.02.84 Gazette 84/05**

(54) **THERMOCHROMIC COMPOSITION.**

(30) Priority: **30.07.82 US 403451**
**20.05.83 US 496689**

(43) Date of publication of application:
**29.08.84 Bulletin 84/35**

(45) Publication of the grant of the patent:
**13.06.90 Bulletin 90/24**

(84) Designated Contracting States:
**AT BE CH DE FR LI NL SE**

(56) References cited:
**GB-A-2 038 478**   **US-A-4 052 280**
**GB-A-2 077 919**   **US-A-4 105 583**
**US-A-3 219 818**   **US-A-4 233 731**
**US-A-3 978 270**   **US-A-4 337 289**

**CHEMICAL ABSTRACTS, vol. 79, no. 14, 8th October 1973, page 503, no. 85690d, Columbus, Ohio, US; & JP - A - 73 40 678 (NITTO ELECTRIC INDUSTRIAL CO., LTD.) 14-06-1973**

(73) Proprietor: **RAYCHEM CORPORATION (a Delaware corporation)**
**300 Constitution Drive**
**Menlo Park, California 94025 (US)**

(72) Inventor: **BROWN, Andrew, Victor**
**479 Safari Drive**
**San Jose, CA 95123 (US)**
Inventor: **GEN, Tamar, Gill**
**567 Lincoln Avenue**
**Palo Alto, CA 94301 (US)**
Inventor: **MOYER, Wendell, William**
**43 Adam Way**
**Atherton, CA 94025 (US)**
Inventor: **WEIHE, Gary, Roy**
**48619 Carlsbad Road**
**Fremont, CA 94539 (US)**

(74) Representative: **Benson, John Everett et al Raychem Limited Intellectual Property Law Department Faraday Road Dorcan Swindon, Wiltshire SN3 5HH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## EP 0 116 584 B1

(56) References cited:
CHEMICAL ABSTRACTS, vol. 90, no. 10, March
1979, page 78, no. 73464x, Columbus, Ohio, US;
& JP - A - 78 128 586 (NAIGAI INK MFG. CO.,
LTD.) 09-11-1978

CHEMICAL ABSTRACTS, vol. 79, no. 16, 22nd
October 1973, page 498, no. 99219u, Columbus,
Ohio, US; & JP - A - 73 40 679 (NITTO ELECTRIC
INDUSTRIAL CO., LTD.) 14-06-1973

# EP 0 116 584 B1

**Description**

The present invention relates to articles provided with temperature indicating compositions so that heating to produce recovery or to activate a heat activatable sealant can be monitored.

Temperature indicating compositions have found widespread use where warning of temperature excursion is required or where a heating process is to be monitored. They are of special use where the desired maximum temperature would not otherwise be apparent to the operator: an example of this is in the use of heat-recoverable materials where a certain temperature is required for proper recovery but where a higher temperature could cause damage. Such recoverable materials are commonly used for sealing, the effectiveness of which is enhanced by provision of a heat-activatable sealant, such as a hot-melt adhesive, a reactive epoxy adhesive or a softenable mastic, on a surface of the recoverable article which will contact the substrate to be sealed. This sealant will not be visible to the installer, who therefore needs some indication that the correct bond-line temperature has been reached. The problem has been overcome by applying to a visible surface of the article to be heated a composition, the color which changes when an internal surface, for example, has reached some desired temperature. Such temperature indication is also applicable to articles which are recovered by means other than heat, but which require heat solely for activation of an adhesive; or which may experience heat during use. Such recoverable articles may be temporarily maintained in their dimensionally unstable configuration by a hold-out member which is removed by dissolving the adhesive bond between the hold-out and the recoverable article or by other means.

A temperature indicating composition which is suitable for use on a recoverable material will contain components that are common to any paint or ink, but they will be chosen and combined with other components to insure suitability for a substrate that will be subjected to a range of temperatures, that changes size or shape, and that should remain environmentally sealing.

The basic components are a colorant, a binder or resin, and often a solvent. The colorant of course gives the composition the desired color and in most paints and inks has the characteristic of permanence. The binder, or binder together with solvent where used, wets the pigment and gives the composition tack and the rheological properties appropriate to the method by which the composition is to be applied to its substrate. Once the composition is on the substrate it is dried, for example by evaporation of solvent, if present. After application, the binder will be responsible for the final film properties of the paint or ink. In general, the colorant must function as a pigment rather than as a dye for its intended application, by which is meant that it must be opaque, rather than transparent. In order to do this it must have hiding power, and the physical property which endows a colorant with hiding power are its refractive index and insolubility. Where the colorant alone has not a sufficiently high hiding power, a further component, called an opacifier and generally white, should be added.

The formulation of a paint or ink is related not only to the method by which it is to be applied and to the properties that the final film must possess, but also to the dyring method to be used. Many methods of drying are available. A brief review will be made of some of the generally applicable methods available for drying inks and paints.

As used herein, the term "drying" refers to all processes by which a temperature indicating composition changes from (i) the form in which it exists before it is applied to a substrate to (ii) the form in which it exists after it is fixed on the substrate. The term "drying" includes all the processes described below, including curing by UV radiation.

Further, as used herein the term "binder" refers to that component of the composition which imparts film forming characteristics to the composition. The binder may comprise a polymer pr pre-polymeric material which cures or polymerizes, or it may comprise such a polymeric or pre-polymeric substance together with a solvent. The term binder is used for the film forming component at all states. Thus the binder can be in liquid form as it is before it is applied to the substrate or in solid form as it is after it has been applied to the substrate and dried.

Drying can occur by penetration; the entire composition is absorbed into the substrate. This is of more use for dyes than pigments since a dye is entirely dissolved in its vehicle. It has not been used on heat-shrink products which are generally non-absorbent.

A second method for drying is hardening of a binder by oxidation. This has not been used on heat-shrink products.

An important method of drying is by solvent evaporation, and this is the technique used for paints that have been used on recoverable products. The paint comprises a pigment suspended in a resin-solvent system, and after application the solvent is removed leaving behind the solid resin. This system is applicable both to paints and to the three major printing techniques: typographic, planographic, and intaglio. The rate of drying can easily be controlled; it is increased by heat, and with heat can be very rapid. Many resin-solvent systems have been developed which satisfy all the requirements as regards, odor, toxicity, color, solvent power, rate of evaporation, boiling range, combustibility and viscosity. The system is highly versatile allowing application by a variety of methods to a variety of substrates.

Polymerization of a binder can also cause the desired change from liquid to solid. A common example of this is styrenated polyester resins containing an appropriate catalyst which promotes curing of the resin after application to the substrate. New techniques involve initiating a polymerization reaction by means of infrared radiation microwaves, dielectric, electron beams or ultra-violet radiation.

Another technique for drying is by means of precipitation. The vehicle in which the colorant is carried is a solvent plus binder, and a further substance is added selectively to precipitate the binder.

Some of the systems that have been used for temperature indicating compositions will now be reviewed.

In United States Patents Nos. 4,142,416, 4,108,001 and 3,995,489 to Smith, compositions are used to detect overheating in electrical apparatus. A current of air is passed through the apparatus to cool it, and parts of the apparatus that are coated with an organic composition which decomposes and thermoparticulates. If overheating occurs, particles of the decomposed composition will be detected downstream of the apparatus. The specification is not concerned with thermochromism, but it mentions that the organic compounds produced char when heated.

United States Patent No. 3,816,335 discloses incorporation of an inorganic thermochromic colorant throughout the body of a heat-recoverable plastic article. A problem that can occur with some inorganic systems is a tendency for the base polymer to become degraded under the action of the colorant and heat. This problem was solved in United States Patent No. 4,105,583 where it was proposed that zinc borate and zinc sulfide should be added to some inorganic systems. Other active ingredients were also mentioned. The disclosures of U.S. Patent No. 4,105,583 and of U.S. Patent No. 3,816,335 are incorporated herein by reference. In U.K. Patent Publication No. 2,038,478, a move was made away from inorganic colorants to the use of organic materials that melt and decompose at the desired temperature, thus causing a color change. In this case the thermochromic ingredient is applied in an aqueous or other vehicle, or as part of a solid formulation such as a wax.

This use of organic materials on recoverable articles can be improved by selection of the binder so that decomposition products of the thermoplastic colorant are trapped thereby insuring irreversibility. This is disclosed in U.K. Patent Publication No. 2,077,919.

The majority of these compositions comprise a pigment, an opacifier, a binder and a solvent. They thus reply, like many paints and inks, on evaporation of a solvent. These compositions have no toxicity problem and they can provide a sharp color change at the desired temperature. Under certain rather exacting circumstances, they can have some drawbacks. In particular, solvent removal requires energy, and if the solvent evaporated is not re-circulated, a further expense is incured. Drying times although short, are often rate-limiting steps in the manufacture of recoverable coated material. A solvent system often results in a thick, sometimes rather dusty, coating of the temperature indicating composition. When a heat-shrink article is recovered by torch any thick areas of coating can concentrate the heat causing hot-spots and cratering of the surface of the article. This is likely to be a problem only with unskilled hands in unfavourable conditions where a hot flame is required; nonetheless it could be regarded as an area of craft-sensitivity which is desirable to reduce.

US 4052280 describes a coating for a substrate which is subjected to UV radiation. The specification describes UV curing of a protective coating such as a paint, which is optionally pigmented. It is not concerned with thermochromic compositions or combinations thereof with recoverable articles.

US Patent No. 3219818 relates to paper coatings comprising a binder and basic dye which gives a colour change due to molecular dissociation. In this document, UV curing of the binder is performed to "fix" a recorded image after exposure to a heat image.

US Patent No. 3978270 describes the use of dehydroindigo di(alkyl acylate) in a binder in making thermal sensitive sheet. There is no mention of the heat shrinkable substrate or the UV curing of the binder when coated on the substrate. Murakami, 79 Chemical Abstracts 85690d, entitled "Thermochromic composition containing Hydrogen tochide and Acid Sensitive Dyes" discloses that the change of acidity of the composition can control a colour change due to the temperature dependence of the dissociation equivalent of the hydrogen iodide and discloses that instantaneous colour change was achieved at various temperatures with various dyes. However, no mention is made of decreasing the temperature at which the colour change occurs. In addition, this reference is silent about the use of heat shrinkable substrates on the UV curing of the binder when coated on a substrate.

Matsumato 90 Chemical Abstract 73464X, discloses a thermochromic composition containing a ring-attached hydroxy group or carboxy group and a fatty acid. There is no mention of the use of heat shrinkable substrates or the UV curing of a binder when coated on a substrate.

Murakami, 79 Chemical Abstract 99219u, discloses thermochromic composition obtained by mixing acid sensitive dyes with dicarboxylic acids to provide an instantaneous colour change. There is no disclosure that an acid activator can be used to decrease the temperature at which the thermochromic composition changes colour. In addition there is no mention of the use of heat/shrinkable substrates on the UV curing of a binder when coated on a substrate.

The following are desirable features of temperature indicating compositions:

1. No toxicity, either before or after being heated.
2. No toxic fumes when heated.
3. No adverse effect on the substrate to which the composition is applied.
4. An easily visible color change: preferably a color change from a bright color visible even in dark manholes and above the ground when viewed silhouetted against the sky, to another easily visible color such as black.

5. A color change that is irreversible.

6. Good hiding properties, i.e. opaque, particularly when the substrate is black, both before and after the color change.

7. A sharp color change at the conversion temperature.

Great difficulty has been experienced in finding suitable thermochromic indicating compositions for many heat recoverable substrates, such as substrates made of materials that recover at temperatures below 150°C.

For example, difficulty has been experienced in finding a suitable temperature indicating composition for heat recoverable polyethylene, which recovers at about 135°C. The thermochromic colorant often used for polyethylene is allantoin. Allantoin has poor hiding power, and thus must be applied in thick layers. Therefore, it is generally unsatisfactory for systems which are applied in thin layers. Further, when allantoin is applied in thick layers, only the outer layer may change color. In use, the outer layer can rub off or the inner layer can bleed through to the outer layer, thereby hiding the color change. Thus, when the part is inspected at a later time, it is impossible to tell whether the part was adequately heated.

In view of this problem, it is apparent that there is a need for temperature indicating compositions that satisfy the above-mentioned requirements, and also can be used over a wide range of temperatures, including temperatures below 150°C. Further, in view of the problems associated with compositions that dry by evaporation of a solvent, there is a need for a temperature indicating composition which can be applied to a recoverable substrate extremely rapidly by printing to produce a very thin coating having sufficient hiding power which will maintain its adhesion during the conformational change that occurs on recovery.

The present invention is directed to temperature indicating compositions that satisfy these needs, and also heat recoverable articles having the dried temperature indicating composition on a surface thereof.

Accordingly, the present invention provides an article, which comprises:

a heat-shrinkable substrate having on a surface thereof a temperature indicating composition applied thereto, characterised in that the composition has been prepared by:

(a) applying to the substrate a UV curable binder provided with colorant which can still produce a substantial colour change in the composition when the composition is heated even after curing of the binder and an initiator in the binder which on exposure to UV radiation initiates a curing reaction in the binder,

(b) then curing the UV curable binder to adhere it to the substrate.

The invention further provides a method of coating a heat-shrinkable substrate with thermochromic material, which comprises:

(1) printing on the substrate a temperature-indicating composition which comprises:

(a) a UV curable binder which on curing is capable of adhering to the substrate;

(b) a colourant which produces in the composition a substantial colour change when the composition is heated; and

(c) an initiator which on exposure to UV radiation initiates a polymerization reaction in the binder;

(2) subjecting the composition to UV radiation to cure the binder, whilst leaving the colourant capable of undergoing said colour change.

The binder ordinarily will contain a reactive oligomer which polymerizes when initiated by the action of UV radiation on initiator or by other means. The reactive oligomer is the primary, and may be the sole, component of the binder and is thus responsible for the bulk of the performance properties of the binders, and thus of the complete composition. The binder may, however, also contain a reactive diluent which will in general comprise one or more monofunctional and multifunctional monomers; the function of this component is to act as a non-evaporating solvent and to provide further cross-linking sites.

Of all the drying techniques available, the use of UV curing gives to the composition particular advantages. A correct choice of binder, colorant, initiator and optional additives allows a composition to be produced which is suitable on articles such as polyolefins and other plastics. Further, UV-curable coatings can be applied in thin layers that dry quickly.

These and other features, aspects and advantages of the present invention will become better understood with reference to the following description.

The present invention may also employ a technique for adjusting over a very broad range the temperature at which the UV curable indicating composition changes colour. The technique is particularly useful for adjusting over a very broad range the temperature at which temperature indicating compositions containing folic acid change color. The technique also has the effect of increasing the blackness of the final converted temperature indicating compositions containing folic acid.

Thus, the composition of the article of the invention may contain an effective amount of activator such that the colour of the composition changes irreversibly at a temperature T2, T2 being at least 20°C less than T1, at which the colourant changes colour in the absence of the activator, the colour change being substantially complete over a 10°C temperature range.

A preferred composition comprises as the activator a crystalline organic acid, such as tartaric acid, that has a pK of less than 4.2 and that is solid in the composition at room temperature, both before and after the composition dries. Such an activator is particularly suitable when the colourant is folic acid.

While not bound by theory, it is believed that what occurs with an acid activator is that the activator melts at about T2, thereby activating the thermochromic colourant so that the colour change occurs. With folic acid, colour changes at temperatures as low as room temperature have been effected, while temperature indicating compositions containing folic acid without the activator change temperature at about 240 to 250°C.

In another version of the invention, the activator is an acid precursor that when exposed to UV light or heat forms an acid that has a pK of less than 4.2. For example, the precursor can form an acid when exposed to UV light, where the acid is solid in the dried composition and melts at about T2. This is particularly useful for systems that dry by UV-curing. Alternatively, the precursor can form an acid when heated to about T2, where the acid is soluble in the composition. Alternatively, the precursor can form an acid when exposed to heat at a temperature less than T2, where the acid does not dissolve in the composition until the composition is heated to about T2.

A temperature indicating composition particularly suitable for heat-recoverable polyethylene has folic acid as the colourant and tartaric acid as the activator. Preferably the composition comprises at least about 5% by weight folic acid based on the weight of the composition so that an easily visible colour change occurs, and less than about 80%, by weight folic acid. For a composition having a UV-curable binder, preferably the composition contains less than about 40% by weight folic acid. For effective activator activity, the composition contains at least 5% by weight activator based on the weight of folic acid. Preferably the composition contains less than about 100%, and more preferably less than about 40%, by weight activator based on the weight of the folic acid because at higher levels, no beneficial effect results and it can lead to an over-filled composition.

The composition used in the invention as claimed in Claims 1 and 45 therefore comprises a UV cured binder, an organic thermochromic colourant that changes colour when heated, and an activator that causes the thermochromic colourant to change colour at a temperature different from that in the absence of the activator. The colour change is sharp, the colour change being substantially complete over a narrow temperature range of about 10°C.

These UV-curable systems can be used with and without the colour change adjustment technique. Preferably the colour change adjustment technique is used with UV-curable systems. However, it is to be realized that the UV-curable compositions can be used without an activator that affects the temperature at which the thermochromic colourant changes colour. Further, the compositions need not be liquid, but can also be in a paste or a crayon form.

The heat recoverable substrate to which the composition is applied may be a recoverable polymeric material or a memory metal such as a beta brass or a nickel-titanium alloy. In particular, the recoverable substrate may be a wraparound or tubular sleeve, or other hollow article, having a heat-activatable adhesive on an inner surface.

The following description will examine the several requirements of such compositions, outline the chemistry of the major components and finally give examples of preferred formulations. In the light of this the chemist skilled in the arts of thermochromism, UV curing, and printing will be able to select a formulation which fulfills his requirements.

The first quality of paint or ink is its colour, and in the case of temperature-indicating paint or ink, colour above and below the transition temperature must be considered. The colour must be chosen bearing in mind the colour of the substrate to which it is to be applied, and the conditions under which it is to be viewed. Recoverable articles for encapsulation are often black and in dark manholes, or above ground and viewed silhouetted against the sky, where they may be difficult to see. In either case a bright colored composition is desirable. Where the substrate is black the composition must have good hiding power, either before or after the color change, and any deficiency here can be made good by the addition of an opacifier such as titanium dioxide, the higher refractive index allotrope, rutile, being preferred. If the thermochromic colorant has ideal properties except for its color, this can be modified by adding a tinting agent.

The color change is preferably quick and irreversible. Where the color change is irreversible the composition will act as a permanent record of the temperature to which the substrate was subjected so that inspection can be made sometime after the heating occurred.

The composition must adhere well to the substrate, so the chemical nature of the substrate and the adequacy of any surface cleaning being undertaken must be considered. In the context of recoverable plastics, adherence is regarded as satisfactory if the composition is not removed by adhesive tape pulled from a surface that has previously been scored with a blade. Adhesion is a tougher requirement in the case of a recoverable material than a dimensionally stable material since the conformational change may lead to cracking or peeling. Furthermore, it is desirable that the coating can retain its integrity under those conditions which the recoverable material itself is expected to be able to endure. The recoverable material may be tested for elongation, pressure or temperature cycling and flexing, etc., and proper adhesion of the composition is preferably maintained throughout such tests. In addition to remaining adhered, it is clearly necessary that the composition does not impair the performance of the substrate to such an extent that it no longer passes the tests by which it will be judged.

The technique used and the conditions under which the composition is applied to the substrate will also affect the choice of components of the composition. The following can be regarded as desirable features of the composition before coating:

6

1. Ready availability

2. Viscosity suitable for printing

3. Long shelf life and no activation by normal incandescent lighting

4. Low volatility and flammability

5. Good hiding power for very thin layers

6. Fast cure rate

7. No ancillary component to be recycled

8. Heat not required for satisfactory cure rate

The UV system of curing allows a composition to be produced which is particularly valuable in each of these respects. In particular, very high cure rates can be obtained which, together with a printing technique, allows material to be coated with the composition extremely rapidly. The coating can be applied very thin, if printed, and formulations can be prepared which give sufficient hiding power at a thickness of 5 microns or less. Where the colorant itself lacks sufficient hiding power and it is undesirable to add normal opacifying agents because of their modifying influence on the final temperature converted color, it has been discovered that the components of the binder itself can be chosen to act as an opacifier on curing. Thin coatings have the advantages of a satisfying appearance, prevention of cratering when flame treated, and a reduction in the quantity of composition that has to be manufactured, stored, processed, and used. A UV curable system need not, and generally will not, involve any solvent; this avoids the energy required for vaporization and avoids any costly recycling apparatus. The fact that no thermal energy is required is of particular use in conjunction with an irreversible thermochromic colorant and with an essentially irreversible recoverable substrate. If excessive heat had to be applied to adhere the composition to the substrate the resulting product would of course be quite useless.

The following remarks on the chemistry of the components of the composition show how these objectives can be achieved. The binder will be discussed first.

The basis of the binder is a reactive oligomer or prepolymer which polymerizes when subjected to UV radiation in the presence of a suitable initiator. A second component of the binder is a reactive diluent which modifies the cure rate, for example, the viscosity of the uncured composition. The principal properties of the final cured resin, however, are generally imparted by the reactive oligomer component. The reactive oligomer preferably constitutes about 30—80% by weight of the composition. The binder must be capable of adhering to the substrate on curing, but it may of course also wet or adhere to the substrate before curing.

Reactive oligomers or prepolymers are customarily used in conjunction with free monomeric and polyfunctional compounds. The functions of added monomers are to modify the properties of the final cured resin and to reduce the viscosity of the oligomer which ordinarily would be too high for conventional application techniques without these "reactive diluents". Even when reactive diluents are used, it is often difficult with filled systems, such as compositions containing thermochromic pigments, to achieve the low viscosity or rheological properties needed for the chosen printing or other coating technique. The "reactive diluent" may comprise from 5—80, preferably from 45—65%, by weight of the UV curable binder.

Four broadly defined classes of binder oligomers will be mentioned: epoxides; unsaturated polyesters; acrylated resins such as acrylated epoxides, acrylated polyesters, acrylated polyethers, acrylated polyurethanes; and polyene/thiols.

An example of the first group is the cycloaliphatic diepoxide, ERL 4299 available from Union Carbide. This product will give excellent adhesion to polyethylene and other plastic substrates. The chain length between the two function groups can be altered to vary the flexibility of the final film, for example, by selecting alternative diepoxides. If need be, flexibility can be further improved by incorporating an extender such as polyethylene glycol, a molecular weight of about 400 being recommended. An alternative epoxide is that manufactured by Ciba Geigy under the designation CY179. They can be produced by alkaline condensation of epichlorohydrin and a dihydric phenol.

The preferred group of binders is the acrylated resins, which can give high cure rates. Polymerization can be carried out in a solvent and the resin/solvent system applied to the substrate, followed by evaporation of the solvent. What is preferred, however, is to initiate polymerization after the composition is applied, thereby dispensing with the solvent. Since these resins contain vinyl groups, polymerization is initiated by free radicals. Some free radical polymerizations are inhibited by oxygen, and may thus require the provision of an inert atmosphere. Initiators required can easily be formulated free of other undesirable elements, such as fluorine, which is present in many cationic initiators and which is considered undesirable in some environments.

Acrylated oligomers sometimes are low molecular weight acrylic polymers which contain residual unsaturated acrylate or methacrylate functionality. Usually, however, the term "acrylated oligomer" applies to low MW polymers of several sorts which are terminated by unsaturated acrylic or methacrylic ester groups. These base polymers commonly are in the class of polyester, ether, urethanes, and epoxides, or combinations of these, but for ease of discussion they may merely be referred to as reactive or unsaturated acrylates, polyesters, urethanes, epoxides, etc. It should be understood that the only active functionality in these resins is that of the terminal acrylate or methacrylate groups in most cases. Seven broad classes are listed below, together with some examples.

| | |
|---|---|
| 1. Acrylated acrylics | Celrad 1700 (Celanese Corp.) |
| 2. Acrylated esters | |
| 3. Acrylated urethanes | Uvithane 893 also Uvithanes 782, 783 and 788 (Thiokol Corp.) |
| 4. Acrylated epoxides | Epocryl 370 (Shell Chemical Co.) Celrad 3200 (Celanese Corp.) |
| 5. Acrylated ether urethanes | Purelast 186 (Polymer Systems Corp.) |
| 6. Acrylated amide | |
| 7. Acrylated carbonate | |

Mono-functional as well as these multi-functional products can be produced. A multi-functional product, such as a difunctional product, will be used to produce a cross-linked resin.

In addition to the series of acrylates, a corresponding series of methacrylates exist. In general, the methacrylates are harder than the corresponding acrylates due to a more rigid molecular structure, and this may result in a reduction in flexibility. Acrylates will in general cure faster than the corresponding methacrylates.

Acrylated urethanes can be produced by reacting hydroxy-containing acrylates with isocyanates. Diisocyanates would produce urethane diacrylates. When these compounds are used as the oligomeric or prepolymeric sole component of the binder, they usually have too high a viscosity. As mentioned above, this can be overcome by adding a reactive diluent. Acrylated urethanes, for example, will be chosen where good flexibility and abrasion resistance are desired. Where the molecular chain is thus extended the acrylated urethane behaves more like a urethane and less like an acrylate.

Acrylated epoxides will be similar to acrylated esters, but they are classified in this way due to the method by which they have been prepared. They are usually derived from epoxy ring opening by acrylic acid.

The binder may also comprise a mercaptan/olefin system which reacts by free radical addition of mercaptan to an olefin. Olefins have a tendency to homopolymerize so the conditions must be chosen to insure that the rate of hydrogen transfer from mercaptan is faster than the homopolymerization rate.

The reactive diluent preferably used in conjunction with the reactive oligomer may be either monofunctional, multifunctional monomers or combinations thereof. Both are used for viscosity adjustment and act as nonvolatile solvents. Where reduced viscosity is the primary consideration, monofunctional diluting monomers may be used, and where high curing rates and a highly cross-linked product are desired, diluting monomers of higher functionality should be added. Materials suitable as the refractive monomers include monoacrylates, diacrylates, triacrylates, tetraacrylates, and other polyacrylates, corresponding methacrylates, vinyl ethers, vinyl esters, vinyl acrylates and unsaturated acids and their corresponding anhydrides. Some examples are given below:

isobornyl acrylate
ethylhexyl acrylate
trimethylpropyl triacrylate
butyl acrylate
tetrahydrofurfuryl acrylate
trihydroxypropyl methacrylate
ethoxyethoxyethyl acrylate
hydroxypropyl methacrylate
hexanediol diacrylate
polyethylene glycol diacrylate
polyethylene glycol dimethacrylate

propylene glycol acrylate
triethylene glycol diacrylate
ethoxyethyl acrylate
pentaerythritol acrylate
phenoxyethyl acrylate
hydroxypropyl acrylate
pentaerythritol triacrylate
pentaerythritol tetraacrylate
vinyl ester of versatic 10 acid
N-vinyl pyrrolidone
styrene
vinyl toluene
itaconic acid
maleic anhydride

The initiator required in the temperature indicating composition can be any of many well known compounds and it preferably is present in an amount equal to about 2—7% by weight of the binder. The initiator will be chosen according to whether ionic (almost invariably cationic) or free radical polymerization is appropriate. Free radical polymerization is generally preferred since a greater variety of reactive materials are available, cure rates are generally faster, use of a wider range of pigments is possible, and cure whitening, to be discussed below, can occur. A disadvantage however is oxygen inhibition. The types of initiator available can be classified in terms of mechanism or in terms of chemical type (especially acyloins, aromatic carbonyls and polyhalogenated compounds). For free radical polymerization, benzoin alkyl ethers, which work by homolytic fission, are preferred. Examples include Darocur 1173 (EM Chemicals) and Irgacure 184 (Ciba-Geigy), which are 2-hydroxy-2-methyl-1-phenyl propanone and 1-hydroxy-cyclohexyl phenyl ketone, respectively. An example of an aromatic carbonyl which works by hydrogen abstraction or electron transfer is benzophenone.

The preferred initiator for cationic polymerization is a 3M product designated FC508, which is a proprietary product believed to be a triarylsulfonium hexafluorophosphate salt.

In either case the preferred amount of initiator is from 1—10%, more preferably from about 2—8% by weight, based on the total weight of the composition.

The thermochromic colorant is at the heart of the system, and all the other components are present in order that the colorant may be applied to a substrate quickly, cheaply and permanently.

The first consideration when choosing a colorant is the temperature of the color change and whether or not the change is reversible. Secondly, it must be able in the composition to provide the desired hiding power. Thirdly, it must be compatible with a binder system already chosen or it must not put undue restraints on the choice of a binder system. Fourthly, it must not adversely affect the substrate to which it is applied.

The colorant can have an effect on the efficiency of the UV cure, on rheological properties, on storage stability and on the surface or gloss of the final film. If the pigment absorbs or scatters radiation of the wavelength that activates the initiator, then efficiency of the initiator will be reduced. If the colorant becomes involved chemically in the initiator reaction it may thereby deactivated the initiator.

Both organic and inorganic compounds can be used as the thermochromic colorant, and attention is directed to the prior art patents referred to above which discuss suitable compounds. Also discussed is a way of overcoming the deleterious effects of some inorganic colorants by the addition of zinc borate and zinc sulfide.

The color change of an inorganic thermochromic material can result from decomposition of the molecule, which is preferred because it is irreversible, from a change in crystalline phase, ligand geometry or number of molecules of solvent in a co-ordination sphere. Also, colorant change can result from an alternation in the equilibrium between various complexes in solution.

With an organic thermochromic colorant, a change in equilibrium between the following species can be responsible for the color change:

Acid—base
Keto—enol
Lactone—lactam
Stereoisomers
Crystal structures

For further information on the chemistry of color change, the reader is referred to J. H. Day, *Chem Reviews*, 1968 pp. 649—657 and 1963 pp. 65—80, the disclosure of which are incorporated herein by reference.

Since hiding power is of importance, especially where the substrate to be coated is black, the colorant will generally be a solid material until decomposed. In very general terms, the color changes that can be expected are:

White to black or brown
Yellow to black or brown
Blue to black Green to black or brown
Red to black
Orange to red
Yellow to orange
Green to yellow to orange.

Many thermochromic colorants, although often described as pigments, have poor hiding power and must be used in high concentration, often with an opacifier such as titanium dioxide, applied in thick layers. Thick layers have to be applied by brush, spray or by dipping which can involve a lot of waste. A large amount of an opacifier is undesirable, not only because it leads to higher viscosity, but also because it lessens the color change. By employing one of the UV curable binders of this invention it is possible to produce a temperature indicating composition having sufficient hiding power at a thickness of 1 micron or less, even when pigments of poor hiding power are used, rather than the more usual 25 to 100 microns. The reason that this can be done by the present invention is that certain of the UV curable binders that have been discovered can themselves act as an opacifier if desired, giving the enhanced opacity necessary for thin film coatings having good hiding power. Although we do not wish to be limited by any theory, the way in which the binder achieves this is believed to be by forming, on curing, at least two micro-dispersed substantial homopolymeric phases. They are able to do this in preferred embodiments due to the presence of two polymerizable components: the reactive oligomer, which preferably has acrylic ester end group functionality, and the diluting monomer which preferably is a vinyl ester. The reactivity between acrylic esters and vinyl esters during free radical initiated polymerizations is unfavorable. The unfavorable reactivity ratio (a well defined term between these two polymerizable constituents in the science of copolymerization kinetics) leads to the formation of two incompatible homopolymer systems and subsequently to microphase separation, which is manifested by a whitened appearance. The resulting cured product was higher opacity and can thus give the colorant the desired extra hiding power. In designing a formulation, therefore, one can choose the colorant for its temperature change and color change, decide what is the maximum permissible thickness of final film, and then choose a combination of binder components with reference to reactivity ratios to give the correct hiding power. Some colorants do not, of course, require this additional hiding power, in which case one has more freedom in the choice of binder.

Tables 1 and 2 below show, respectively, preferred pigments for UV-cure compositions, and other pigments which although not preferred, are suitable for UV-cure systems. The color before-after the thermochromic color change and the approximate temperature of the change, in the absence of an activator, are given.

TABLE 1

| Colorant | Temperature of change | Color |
|---|---|---|
| Lysine | 245°C | White-Brown |
| Allantoin | 250°C | White-Black |
| Folic Acid | 255°C | Yellow-Black |
| Arginine | 255°C | White-Brown |
| Glycine | 260°C | White-Black |
| Barium Lithol Red | 265°C | Red-Black |
| Basic Copper Carbonate | 270°C | Green-Brown |
| Thiamine | 270°C | White-Black |
| $Fe_2O_3$ | 275°C | Yellow-Brown |
| Creatine | 300°C | White-Black |

TABLE 2

| Colorant | Color change | | Temperature |
|---|---|---|---|
| Cobalt Carbonate | Blue | Black | 250°C |
| Dalamar Yellow | Yellow | Black | 250°C |
| Calcium Pantothenate UPS (American Roland Corp.) | White | Yellow | 230°C |
| P-(Phenylazo) Meleanilic Acid (Aldrich) | Yellow | Black | 230°C |
| Thermopaint #22 | White | Grey | 230°C |
| Cobalt Ammonium Phosphate (Shepard) | Purple | Blue | 230—240°C |
| Oleo Carrot (Stange) | Orange | Black | 230—300°C |
| Copper Thiodipropionate | Turquiose | Brown | 235°C |
| Phenolphthalein Disulfate Dipotassium Salt (Aldrich) | White | Purple | 240—250°C |
| Thermocolor 2830/6 (Telatemp) | Green | Brown | 240—265°C |
| Copper Carbonate (Shepard) | Green | Black | 245°C |
| Temp-Alarm Paint 17E (Big Three Ind.) | Lt. Green | Brown | 245°C |
| Azodicarbonamide (Aldrich) | Pale Yellow | White | 250°C |
| Bromocresol Purple (Aldrich) | Grey | Dark Red | 250—255°C |
| Atlasol Spirit Orange 2GK (Atlantic Chem) | Orange | Black | 250—260°C |
| Antimony (V) Sulfide (Alfa) | Orange | Black | 250—270°C |
| Victoria Blue BX Powder (Dye Specialties) | Blue | Black | 250—270°C |
| Bromocresol Green $H_2O$ Soluble (Aldrich) | Brown | Black | 255°C |
| Temp-Alarm Paint 126A (Big Three Ind.) | Green | Black | 255°C |
| 5-Amino-4-Phenylazo- 3-Pyrazolol (Aldrich) | Orange | Black | 255—260°C |
| Hydrindantin Dihydrate (ICN Pharm.) | White | Brown | 255—265°C |
| Temp-Alarm Paint (Big Three Ind.) | Rust-Brown | Brown | 255—265°C |

11

TABLE 2 (cont'd)

| Colorant | Color change | | Temperature |
|---|---|---|---|
| C.P. Paratoner Deep (Ciba-Geigy) | Red | Black | 260°C |
| C.P. Paratoner Medium (Ciba-Geigy) | Red | Black | 260—270°C |
| C.P. Paratoner X-Light | Red | Black | 260—270°C |
| Sodium Pyruvate (ICM Pharm.) | White | Yellow | 260—280°C |
| Turmeric 50 M. Ster. (Stange) | Orange-Yellow | Black | 260—300°C |
| Victoria Blue B (Aldrich) | Brown | Black | 270°C |
| Milling Blue FFR Crude (Atlantic Chem.) | Scarlet | Black | 270—280°C |
| Beet Powder (Stange) | Orange-Brown | Black | 270—290°C |
| 2,3-Pyrazine Dicarboxamide (Aldrich) | White | Brown | 275°C |
| Temp-Alarm. Paint 44B (Big Three Ind.) | Blue | Grey-Green | 275°C |
| Toluidine Yellow 10G (DuPont) | Yellow | Black | 275—285°C |
| Temp-Alarm Paint 41A (Big Three Ind.) | Blue | Black | 275—305°C |
| Toluidine Red D (Cyanamide) | Red | Black | 280°C |
| Bromothymol Blue (MCB) | Drk Green | Black | 285°C |
| Succinamide (Aldrich) | White | Lt. Brown | 285—295°C |
| Tempilaq 550°F (Temil Corp.) | White | Brown | 285—295°C |
| Thermopaint 25 | Lt. Blue | Reddish-Brown | 285—295°C |
| Amylose (Aldrich) | White | Brown | 290°C |
| Citrus Bioflavonoid Complex (American Roland Corp.) | Brown | Black | 290°C |
| Bay Ferrox Yellow 930 (Mobay) | Yellow-Brown | Brown | 290°C |
| Hansa Red 3B (Amer. Hoechst) | Red | Black | 290°C |
| Toluidine Red D 20-3920 (Cyanamid) | Red | Black | 290°C |

A selection of these colorants was tested on a heat-recoverable wraparound sleeve. The sleeve had a rail-like protuberance running adjacent one longitudinal edge, and one spaced slightly from the other longitudinal edge to define a flap which underlies the two rails when they are brought together in the wraparound configuration. The two rails are held together by a channel which is slid over them. This general type of arrangement is disclosed in U.K. Patent Specification No. 1,155,470, the disclosure of which is incorporated herein by reference. The internal surface of the sleeve was coated with a hot-melt adhesive and the external surface coated with a temperature-indicating composition of this invention, applied to a thickness of about 1 micron using a gravure printing technique. The sleeve was then recovered by heating with a propane torch. The following colorants changed in color at the web and flap temperatures shown in Table 3.

TABLE 3

| Colorant | Web | Flap |
|---|---|---|
| (a) Cobalt Carbonate | 155°C | 82°C |
| (b) Dalamar Yellow | 170°C | 98°C |
| (c) Allantoin | 157°C | 90°C |
| (d) $Fe_2O_3$ | 175°C | 101°C |
| (e) Folic Acid | 185°C | 89°C |
| (f) Basic Copper Carbonate | 188°C | 99°C |

The preferred colorant for systems containing an activator is folic acid. It has been found, as demonstrated by the examples below, to be particularly sensitive to adjustment of the temperature at which the color change occurs. Folic acid, without adjustment, changes color at about 240°C to 250°C. Compositions containing folic acid with suitably chosen activators change color at temperatures less than 230°C, and even less than 200°C and 150°C. Another advantage obtained with folic acid is that folic acid normally changes color from yellow to a brown/black. Compositions according to the present invention containing folic acid change color to a dark black, thereby providing a more visible color change.

Allantoin has been found to be an unsatisfactory colorant for systems containing an activator. Attempts to reduce the conversion temperature of allantoin with a strong organic acid have been unsuccessful in that although the conversion temperature was reduced, conversion occurred over a broad temperature range. A narrow temperature range of conversion on the order of 10°C is required for heat-recoverable articles.

In one version of the invention where an activator is used, the activator is an organic acid. Only relatively strong acids have been found to be effective. Thus, the acid requires a pK of less than about 4.2. Of the acids tested, only one acid having a pK substantially less than 4.2 failed to reduce the conversion temperatures of a composition containing folic acid. That acid is o-toluic acid which has a pK of 3.91 according to the CRC Handbook of Chemistry and Physics.

It is necessary that the activator not adversely affect the properties of the other components of the composition. It must not interfere with the UV curing process, it must not cause premature and uncontrollable degradation of the temperature change, and it must cause color change over a narrow temperature range. Preferably the activator is solid at room temperature and is insoluble in the binder system both before and after the binder system is cured. Acid activators which dissolve in the binder system have been found to prematurely and uncontrollably degrade the thermochromic colorant when it has been folic acid. Also, volatile strong acids such as hydrochloric acid and trifluoroacetic acid have not been found useful, most likely because they are lost by evaporation.

The activator can also be an acid precursor that when heated or subject to UV light forms a strong acid having a pK less than about 4.2. Such an acid precursor can be a compound that when heated as the recoverable article on which it is coated is heated degrades or decomposes to yield a strong acid at T2. Another example of an acid precursor is a material that generates an acid when it is exposed to UV light, where the acid melts or dissolves in the compositions at about T2.

Not to be bound by theory, it is believed that this adjustment of the temperature at which the temperature indicating composition changes color is a result of activation of the thermal decomposition of the colorant. It has been found that soluble acids such as sulfuric acid when added to a coating composition containing folic acid cause decomposition of the folic acid and color change at room temperature.

Crystalline, insoluble acids when added to a folic acid composition, have been found to promote the decomposition and color change of folic acid at a temperature generally related to the melting point of the added acid. Conversion occurs at a temperature 10—40°C below the nominal melting point of the acid.

13

The temperature at which color change occurs can vary depending on the physical form of the activator, i.e., powder, crystals, etc., and the method of incorporating the activator into the composition, i.e. grinding, milling, or simple mixing.

Exemplary of materials which serve as acid precursors and which have been found to be effective, are triarylsulfonium salts which generate strong acids when exposed to UV light or heat. These salts are available from 3M under catalog numbers FC508 and 509. These salts are described in U.S. Patent Nos. 4,058,401; 4,138,255; and 4,161,478, which are incorporated herein by this reference.

The composition of this invention contains from about 5 to about 80% by weight colorant. Preferably the composition contains at least 5% by weight activator, based on the weight of colorant, for effective activity. Preferably the composition contains up to about 100% weight of the activator, based on the weight of the colorant. Greater quantities can be used, but there is generally no beneficial effect and it can lead to an over-filled composition.

All percentages herein are based on the weight of the composition unless stated otherwise.

The major optional components of the composition are as follows:

1. Surfactants such as FC-171, a fluorocarbon surfactant (3M)
2. Thickening agent such as Aerosil R972, a hydrophobic silicon
3. Color tinting agents such as phthalocyanie green BS
4. Opacifiers, such as titanium dioxide
5. Sensitizers to improve activity of the initiator, such as FC-510 (3M)
6. Stabilizers or deactivators, such as zinc sulfide or zinc borate.

Where these components are used, the following quantities are preferred:

| | |
|---|---|
| Surfactant | 0.5—1.5% wt. |
| Thickening agent | 0—10% wt. |
| Color tint | 0—5% wt. |
| Opacifier | 0—3% wt. |
| Sensitizer | 0—8% |
| Deactivator | 0—10% |

Depending on the opaqueness of the composition and the color of the substrate, the composition is applied to a substrate to produce a coating from about 5 micrometers to about 20 micrometers thick. The more opaque the coating, the less thick need be the coating to obtain adequate hiding.

Examples

The invention is now further illustrated by the following examples. The percentages given are percentages by weight.

Example 1

| | |
|---|---|
| ERL-4299<br>Epoxy Resin, cycloaliphatic diepoxide<br>Union Carbide | 55.10% |
| Carbowax 400 (PEG 400)<br>Polyethylene glycol<br>Union Carbide | 24.80% |
| FC 508<br>Cationic Photoinitiator<br>3M | 4.00% |
| FC-171<br>Surfactant<br>3M | 0.50% |
| Dalamar Yellow<br>Thermochromic colorant<br>DuPont Chemicals | 15.00% |

# EP 0 116 584 B1

| | |
|---|---|
| Monastral blue | 0.15% |
| Tinting agent | |
| DuPont Chemicals | |
| | |
| Rutile | 0.45% |
| Titanium dioxide | |
| Opacifier | |

The ink had a good appearance and good adhesion to cross-linked polyolefin substrates with a suitably low viscosity of 4000 cps. It produced a flexible tough coating on recoverable polymeric substrates.

Example 2

The following formulation was prepared:

| | |
|---|---|
| ERL-4299 | 50.2% |
| FC-508 | 4.0% |
| FC-171 | 0.5% |
| PEG-400 | 22.7% |
| FC-510 Photosensitizer | 1.0% |
| Dalamar Yellow | 20.0% |
| Rutile | 0.6% |
| Aerosil Degusa R972 Thickening Agent | 1.0% |

This produced a satisfactory ink with a higher viscosity of 7420 cps. The higher proportion of Dalamar Yellow, which is a very finely ground colorant, and the use of 1% of a thickening agent produced the higher viscosity.

Example 3

The following formulation was prepared:

| | |
|---|---|
| ERL-4299 | 46.4% |
| FC-508 | 4.0% |
| FC-510 | 1.0% |
| FC-171 | 0.5% |
| Polyethylene Glycol 400 | 21.6% |
| Theophylline (Thermochromic colorant) | 15.0% |
| Dalamar Yellow | 10.0% |
| Rutile | 0.4% |
| Cab-O-Sil (Thickener) | 1.1% |

A satisfactory product was obtained.

Example 4

The following binder system was prepared:

| | |
|---|---|
| CY-179 Cycloaliphatic epoxy | 89.5% |
| Ciba Geigy | |
| FC-507 | 10.0% |
| FC-430 | 0.5% |

This binder showed excellent adhesion to cross-linked polyolefins.

15

Example 5

The following binder system was prepared:

| | |
|---|---|
| Epocryl 370 Acrylated epoxy, Shell Chemical Co. | 62.3% |
| Ethyl hexyl acrylate | 33.7% |
| EM Chemicals Darocur 1173, Free Radical Photoinitiator | 4.0% |

The binder was satisfactory, although rather brittle for some applications. Adhesion to plastics was not regarded as good, and would be less useful on plastics with high recovery ratios.

Example 6

A binder having the following composition was produced:

| | |
|---|---|
| Epocryl 370 | 32.5% |
| Polyethylene glycol dimethacrylate (200) | 63.5% |
| Darocur 1173 | 4.0% |

This product had fair strength, good adhesion and good flexibility. It showed some brittleness but can be regarded as a satisfactory formulation.

Example 7

The following binder system was prepared:

| | |
|---|---|
| Uvithane 893 An acrylated urethane, Thiokol | 43.8% |
| Ethoxyethyl acrylate | 47.4% |
| Darocur 1173 | 8.8% |

The result was a highly flexible coating, allowing considerable elongation, reasonable strength, and excellent adhesion to polyolefins.

Example 8

The following binder system was prepared:

| | |
|---|---|
| Epocryl 370 | 5.32% |
| Uvithane 893 | 23.24% |
| Propylene glycol monoacrylate | 68.10% |
| Darocur 1173 | 3.34% |

This composition showed excellent strength, excellent adhesion and good flexibility. Before curing it showed low viscosity.

Example 9

Viscosity measurements were made on the following binder compositions. Since there was no intention to cure the compositions, no initiator was added. It is not expected that the small amount of initiator normally required would alter the viscosities sufficiently to invalidate the comparison. Measurements were made at room temperature.

16

| | |
|---|---|
| Uvithane 893 | 33.4% |
| Dicyclopentenyloxyethyl Acrylate | 66.6% |
| Viscosity=4600 cps | |

| | |
|---|---|
| Uvithane 893 | 33.2% |
| Phenoxyethyl acrylate | 66.8% |
| Viscosity=2000 cps | |

| | |
|---|---|
| Uvithane 893 | 33.5% |
| 1,6-Hexanediol diacrylate | 16.5% |
| Phenoxyethyl acrylate | 50.0% |
| Viscosity=1400 cps | |

| | |
|---|---|
| Uvithane 893 | 22.2% |
| 1,6-Hexanediol diacrylate | 11.0% |
| Phenoxyethyl acrylate | 33.4% |
| Dicyclopentenyloxyethyl Acrylate | 33.4% |
| Viscosity=800 cps | |

Example 10

The following temperature indicating composition was prepared:

| | |
|---|---|
| VV10 Vinyl ester of versatic 10 acid<br>  Shell Chemical Co. | 39.8% |
| Celrad 3200 acrylated aromatic/aliphatic<br>  epoxy blend<br>  Celanese Corp. | 32.5% |
| Irgacure 184 free radical photoinitiator<br>  Ciba Geigy | 4.6% |
| Folic acid thermochromic colorant | 13.8% |
| Rutile | 0.8% |
| Phthalocyanine Green BS<br>  BASF | 0.5% |
| Ganex V-216 a poly(vinylpyrrolidone)<br>  surfactant<br>  GAF Corp. | 0.8% |
| Aerosil R972 amorphous silica<br>  thickener<br>  Degussa | 7.2% |

This composition exhibits cure whitening and has excellent hiding power and contrast at coatings as thin as 1.0 micron. The coatings produced were tough and flexible and adhered well to polyolefins.

Example 11

The following temperature indicating composition was prepared:

| | |
|---|---|
| VV10 | 38.3% |
| Celrad 3200 | 31.7% |
| Irgacure 184 | 5.0% |
| Basic Copper Carbonate | 12.0% |
| ZnS | 6.0% |
| $ZnB_2O_3$ | 6.0% |
| $TiO_2$ | 0.5% |
| Phthanlocyanine Green BS | 0.5% |

A satisfactory product was obtained.

Example 12
The following temperature indicating composition was prepared:

| | |
|---|---|
| VV10 | 38.8% |
| Celrad 3200 | 31.2% |
| Irgacure 184 | 5.0% |
| Allantoin | 23.0% |
| $TiO_2$ | 1.5% |
| Phthalocyanine Green BS | 0.5% |

A satisfactory product was obtained.

Example 13
The following binder system was prepared:

| | |
|---|---|
| Epocryl 370 | 31.6% |
| Polyethylene glycol dimethacrylate (600) | 64.8% |
| Darocur 1173 | 3.6% |

The product had fair strength, good flexibility and elongation and satisfactory adhesion to cross-linked polyolefins.

Example 14
The following binder system was prepared:

| | |
|---|---|
| Uvithane 893 | 61.4% |
| Hexanediol diacrylate | 23.2% |
| Propylene glycol monoacrylate | 11.3% |
| Darocur 1173 | 4.1% |

The product cured well, had good flexibility and good adhesion to cross-linked polyolefins.

Example 15
The following binder system was prepared:

| | |
|---|---|
| Uvithane 893 | 43.1% |
| Propylene glycol monoacrylate | 43.4% |
| Ethoxyethyl acrylate | 10.3% |
| Darocur 1173 | 3.2% |

The product was very flexible, had good elongation and strength and excellent adhesion to cross-linked polyolefins.

Example 16
The following binder system was prepared:

| | |
|---|---|
| Uvithane 893 | 27.5% |
| Dicyclopentenyloxyethyl acrylate | 68.6% |
| Darocur 1173 | 3.7% |

The product showed excellent adhesion to cross-linked polyolefins.

18

Example 17

The following binder system was prepared:

| | |
|---|---|
| Uvithane 893 | 32.4% |
| Phenoxyethyl acrylate | 64.8% |
| Darocur 1173 | 2.8% |

The product was highly flexible, showed strong surface cure in film form and excellent adhesion to cross-linked polyolefins.

Example 18

The following binder system was prepared:

| | |
|---|---|
| Uvithane 893 | 20% |
| Hexanediol diacrylate | 6% |
| Dicyclopentenyloxyethyl acrylate | 71% |
| Darocur 1173 | 3% |

The product was strong and flexible, and adhered well to cross-linked polyolefins.

Example 19 Control Sample

A typical UV curable temperature indicating composition employing folic acid as the thermal indicating substance is composed as follows:

| | |
|---|---|
| VV10 (vinylester of versatic acid Shell Chemical Co.) | 39 |
| Irgacurew 184 (1-hydroxycyclohexyl phenyl ketone, Ciba-Geigy) | 4.5 |
| Celrad 3200 (acrylated epoxy oligomer, Celanese) | 27 |
| Folic Acid (USP, ground powder) | 25 |
| Igepal CO-430 [nonylphenoxypoly (ethyleneoxy) ethanol, GAF] | 3.5 |
| Thixatrol ST (castor oil derivative Thickening agent, NL Industries) | 1.0 |

The above composition was first mixed in a Waring Blender and then ground on a three roll paint mill. This composition when coated onto a polyolefin sheet substrate at a thickness of 10—15 microns and UV cured was bright yellow in color with good hiding power. Upon heating this sample to a temperature in the range of 240 to 250°C, the color changed sharply from yellow to dark brown-black. The color change was irreversible.

Examples 20—45, acid containing samples

The composition described in Example 19 was modified by the addition of the acids listed below in Table 4. Test specimens for observing and measuring the thermal conversion temperatures were prepared in Example 19. The initial appearance of the coated and cured samples was identical to that of Example 19, the unmodified composition. The results are summarized in Table 4. Color changes were irreversible, and were substantially complete over a 10°C temperature range.

TABLE 4
Effect of catalysts on the thermal conversion of folic acid
containing, UV cured coatings

| Ex. # | Activator | M.P., °C | pK | Temp. °C | Appearance |
|-------|-----------|----------|------|----------|------------|
| 20 | Maleic Acid | 131 | 1.83 | 120 | Black |
| 21 | meso-Tartaric acid | 146 | 3.22 | 120—130 | " |
| 22 | Citric Acid | 153 | 3.14 | 130 | " |
| 23 | d-Tartaric Acid | 170 | 2.89 | 130—140 | " |
| 24 | Malonic Acid | 136 | 2.83 | 135 | " |
| 25 | Succinic Acid | 188 | 4.16 | 135—145 | " |
| 26 | Oxalic Acid | 187 | 1.23 | 145 | " |
| 27 | Glycolic Acid | 79 | 3.83 | 150 | Black |
| 28 | Ascorbic Acid | 193 | 4.10 | 150—160 | " |
| 29 | d,1-Tartaric Acid | 205 | 2.98 | 155—165 | " |
| 30 | Salicylic Acid | 160 | 2.97 | 160 | " |
| 31 | cis-1,2-cyclohexne-dicarboxylic acid | 195 | 3.45 | 180 | " |
| 32 | Fumaric Acid | 287 | 3.03 | 210 | " |
| 33 | Tannic Acid | 200 | | 190—205 | " |
| 34 | 2-Naphthoic Acid | 185 | 4.17 | 210 | Black-Brown |
| 35 | o-Toluic Acid | 103 | 3.91 | * | " |
| 36 | Benzoic Acid | 122 | 4.19 | * | " |
| 37 | Phenylacetic Acid | 77 | 4.28 | * | " |
| 38 | Adipic Acid | 153 | 4.43 | * | " |
| 39 | p-Anisic Acid | 185 | 4.47 | * | " |
| 40 | Suberic Acid | 140—4 | 4.52 | * | " |
| 41 | Crotonic Acid | 71 | 4.64 | * | " |
| 42 | Neoheptanoic Acid | 25 | 4.89 | * | " |
| 43 | Stearic Acid | 70 | 5.00 | * | " |
| 44 | Anthranilic Acid | 146—7 | 6.97 | * | " |
| 45 | p-Toluenesulfonic Acid | 104—5 | 0.7 | 90 | Black |

* The conversion temperature was essentially the same as that of the control sample, Example 19.

Example 46
    A preferred UV curable composition having an activator is as follows:

| Component | % |
|---|---|
| VV10 Vinyl ester of versatic acid, Shell Chemical Co. | 35.1% |
| Celrad 3200 acrylated aromatic/aliphatic epoxy blend, Celanese Corp. | 28.7% |
| Irgacure 184 free radical photoinitiator Ciba Geigy | 4.6% |
| Folic acid thermochromic colorant | 25.0% |
| Phthalocyanine Green BS BASF | 0.1% |
| Ganex V-216 a poly(vinylpyrrolidone) Surfactant GAF Corp. | 1.0% |
| d,1-Tartaric Acid | 5.0% |
| Thixatrol ST Colloidal Thixotropic agent, National Lead | 0.5% |

This composition exhibits cure whitening and has excellent hiding power and contrast at coatings as thin as 5 microns. The coatings produced were tough and flexible and adhered well to polyolefins, including heat recoverable polyethylene.
    The composition changed color from yellow-green to a dark black over a temperature range of 160—170°C.
    It was applied to a polyethylene substrate with a gravure printer.

Example 47
    The following protective formula shows the use of an activator with a temperature indicating composition that dries by solvent evaporation.

| Component | % |
|---|---|
| Acryloid B66, methyl methacrylate polymer, Rohm & Haas | 4.2% |
| Perchloroethylene | 19.2% |
| 1,1,1-Trichloroethane | 57.3% |
| Folic Acid | 13.03% |
| Monastral green DuPont | 0.07% |
| Irganox 1010, anti-oxidant Ciba Geigy | 0.27% |
| Plastanox 1212, anti-oxidant American Cyanamid | 0.27% |
| Dioctylphthalate | 0.55% |
| Thixatrol ST | 0.11% |
| d,1-Tartaric Acid | 5.0% |

21

Example 48

Using the binder of Example 19, the folic acid was replaced with Congo Red and d-tartaric acid was used as an activator. When the composition was placed on a slide, it changed color about 130—140°C. When the d-tartaric acid was left out of the composition, it changed color at about 200°C. The color changes were irreversible and were substantially complete over a 10°C temperature range.

Example 49

Using the composition of claim 19, the folic acid was replaced with sugar. In one test, tartaric acid was added as an activator, and the composition changed colour at about 130—140°C. In another test, toluene sulfonic acid was added as an activator, and the uncured composition changed colour at about 90°C. The colour changes were irreversible and were substantially complete over a 10°C temperature range.

Example 50

Using the composition of Example 19, the folic acid was replaced with Methyl Orange and tartaric acid was added as an activator. The composition changed colour at about 130—140°C. The colour change was irreversible and was substantially complete over a 10°C temperature range.

**Claims**

1. An article, which comprises:
a heat-shrinkable substrate having on a surface thereof a temperature indicating composition applied thereto, characterised in that the composition has been prepared by:
(a) applying to the substrate a UV curable binder, provided with a colorant which can still produce a substantial colour change in the composition when the composition is heated even after cure of the binder and an initiator in the binder which on exposure to UV radiation initiates a curing reaction in the binder,
(b) then curing the UV curable binder to adhere it to the substrate

2. An article according to claim 1, in which the substrate is a memory metal, which can change its configuration on passing through its transition temperature.

3. An article according to claim 1 or 2, in which the substrate is a plastics material.

4. An article according to claim 2 or 3, in which the substrate is hollow.

5. An article according to claim 4, in which the substrate is a sleeve.

6. An article according to claim 5, in which the temperature indicating composition is on an outer surface of the sleeve.

7. An article according to claim 6, in which the sleeve has on an inner surface a heat-activatable sealant.

8. An article according to claim 7, in which the sealant is a hot-melt adhesive.

9. An article according to claim 1, in which the binder comprises an acrylated resin oligomer.

10. An article according to claim 9, in which the acrylated resin oligomer is an acrylated aromatic/aliphatic epoxy blend.

11. An article according to claim 10, in which the acrylated resin oligomer is an acrylated urethane.

12. An article according to claim 1, in which the binder comprises a reactive oligomer and a reactive diluent.

13. An article according to claim 12, in which the reactive diluent is a vinyl ester.

14. An article according to claim 13, in which the binder on curing substantially comprises microdispersed homopolymers of said reactive oligomer and of said reactive diluent.

15. An article according to claim 12, in which the binder is applied comprises of 35 to 55% weight of said reactive oligomer and 65—45% of said reactive diluent.

16. An article according to claim 12, in which the reactive oligomer is an acrylated aromatic/aliphatic epoxy blend and the reactive diluent is a vinyl ester of versatic acid.

17. An article according to claim 1, in which the colorant is folic acid.

18. An article according to claim 1, in which the colorant is copper carbonate.

19. An article according to claim 1, in which the initiator generates free radicals in the presence of UV radiation.

20. An article according to claim 1, in which the initiator generates cation in the presence of UV radiation.

21. An article according to claim 1, in which the thickness of the composition is less than 10 microns.

22. An article according to claim 1, in which the substrate has the composition printed on a surface thereof.

23. An article according to claim 1, in which the colour change is produced by heating the composition to a temperature below 300°C.

24. An article according to claim 1, in which the colour change is produced by heating the composition to a temperature below 200°C.

25. An article according to claim 1, in which the composition contains an effective amount of an activator such that the colour of the composition changes irreversibly at a temperature T2, T2 being at least 20°C less than the temperature T1, at which the colourant changes colour in the absence of the activator, the colour change being substantially complete over a 10°C temperature range.

22

26. An article according to claim 25, in which the composition comprises from about 5% to about 100% by weight of folic acid as the colourant.

27. An article according to claim 25 or 26, in which the activator comprises an acid that has a pK of less than 4.2 and that is solid in the binder at room temperature.

28. An article according to claim 27, in which the activator is a carboxylic acid.

29. An article according to claim 28, in which the activator is tartaric acid.

30. An article according to claim 25, in which the activator comprises an acid precursor that when exposed to UV light or heat forms an acid that has a pK of less than 4.2

31. An article according to claim 30, in which the composition comprises from about 5% to about 80% by weight of folic acid as the colourant.

32. An article according to claim 25, wherein T2 is less than 230°C.

33. An article according to claim 25, in which the composition is applied as a liquid.

34. An article according to claim 25, in which the activator is solid in the binder at room temperature.

35. An article according to claim 34, in which the activator is solid in the binder at room temperature both before and after the composition dries.

36. An article according to claim 25, in which the composition contains activator in an amount of from about 5 to about 100% by weight of the colourant.

37. An article according to claim 30, in which the acid is solid in the dried composition at room temperature.

38. An article according to claim 27, in which the acid dissolves in the composition at about T2.

39. An article according to claim 30, in which the acid is an organic acid.

40. An article according to any of claims 1 to 24 in which the color change is irreversible.

41. An article according to claim 1, wherein:

the heat-shrinkable substrate comprises polyethylene;

the dried temperature-indicating composition comprises:

an effective amount of both folic acid as the colorant and tartaric acid so that the folic acid changes colour when heated to a temperature $T_2$ to produce a detectable colour change in the temperature-indicating composition; wherein:

the colour change is irreversible, temperature $T_2$ is less than 200°C, and the colour change is substantially complete over a 10°C temperature range.

42. An article according to claim 41, comprising about 5 to about 40% by weight of folic acid based on the weight of the composition, and from about 5 to about 100% by weight tartaric acid based on the weight of the acid.

43. A method of coating a heat-shrinkable substrate with thermochromic material, which comprises;

(1) printing on the substrate a temperature-indicating composition which comprises:

(a) a UV curable binder which on curing is capable of adhering to the substrate;

(b) a colourant which produces in the composition a substantial colour change when the composition is heated; and

(c) an initiator which on exposure to UV radiation initiates a polymerization reaction in the binder;

(2) subjecting the composition to UV radiation to cure the binder, whilst leaving the colourant capable of undergoing said colour change.


**Patentansprüche**

1. Gegenstand, umfassend:

einen warmschrumpfbaren Träger, auf dessen eine Oberfläche eine Temperaturanzeigezusammensetzung aufgebracht ist, dadurch gekennzeichnet,

daß die Zusammensetzung hergestellt ist durch:

(a) Aufbringen eines UV-härtbaren Bindemittels auf den Träger, das versehen ist mit: einem Farbstoff, der selbst nach Härten des Bindemittels noch eine wesentliche Farbänderung in der Zusammensetzung bewirken kann, wenn die Zusammensetzung erwärmt wird, und einem Initiator im Bindemittel, der bei Belichtung mit UV-Strahlung im Bindemittel eine Härtungsreaktion auslöst,

(b) anschließendes Härten des UV-härtbaren Bindemittels zur Haftverbindung mit dem Träger.

2. Gegenstand nach Anspruch 1, wobei der Träger ein Metall mit Erinnerungsvermögen ist, das bei Durchlaufen seiner Übergangstemperatur seine Konfiguration ändern kann.

3. Gegenstand nach Anspruch 1 oder 2, wobei der Träger ein Kunststoff ist.

4. Gegenstand nach Anspruch 2 oder 3, wobei der Träger hohl ist.

5. Gegenstand nach Anspruch 4, wobei der Träger eine Hülse ist.

6. Gegenstand nach Anspruch 5, wobei sich die Temperaturanzeigezusammensetzung auf einer Außenfläche der Hülse befindet.

7. Gegenstand nach Anspruch 6, wobei die Hülse auf einer Innenfläche ein wärmeaktivierbares Dichtmittel aufweist.

8. Gegenstand nach Anspruch 7, wobei das Dichtmittel ein Schmelzkleber ist.

9. Gegenstand nach Anspruch 1, wobei das Bindemittel ein Akrylharzoligomer umfaßt.

10. Gegenstand nach Anspruch 9, wobei das Akrylharzoligomer ein aromatisches/aliphatisches Akryl-Epoxidgemisch ist.

11. Gegenstand nach Anspruch 10, wobei das Akrylharzoligomer ein Akrylurethan ist.

12. Gegenstand nach Anspruch 1, wobei das Bindemittel ein reaktionsfähiges Oligomer und einen reaktionsfähigen Verdünner umfaßt.

13. Gegenstand nach Anspruch 12, wobei der reaktionsfähige Verdünner ein Vinylester ist.

14. Gegenstand nach Anspruch 12, wobei das Bindemittel bei der Härtung im wesentlichen hochdispergierte Homopolymere des reaktionsfähigen Oligomers und des reaktionsfähigen Verdünners umfaßt.

15. Gegenstand nach Anspruch 12, wobei das Bindemittel beim Auftragen 35—55 Gew.-% des reaktionsfähigen Oligomers und 65—45% des reaktionsfähigen Verdünners umfaßt.

16. Gegenstand nach Anspruch 12, wobei das reaktionsfähige Oligomer ein aromatisches/aliphatisches Akryl-Epoxidgemisch und der reaktionsfähige Verdünner ein Versatic-Säure-Vinylester ist.

17. Gegenstand nach Anspruch 1, wobei der Farbstoff Folsäure ist.

18. Gegenstand nach Anspruch 1, wobei der Farbstoff Kupfer(II)-carbonat ist.

19. Gegenstand nach Anspruch 1, wobei der Initiator in Anwesenheit von UV-Strahlung freie Radikale erzeugt.

20. Gegenstand nach Anspruch 1, wobei der Initiator in Anwesenheit von UV-Strahlung Kationen erzeugt.

21. Gegenstand nach Anspruch 1, wobei die Dicke der Zusammensetzung weniger als 10 µm beträgt.

22. Gegenstand nach Anspruch 1, wobei die Zusammensetzung auf eine Oberfläche des Trägers aufgedruckt ist.

23. Gegenstand nach Anspruch 1, wobei die Farbänderung durch Erwärmen der Zusammensetzung auf eine Temperatur unter 300°C herbeigeführt wird.

24. Gegenstand nach Anspruch 1, wobei die Farbänderung durch Erwärmen der Zusammensetzung auf eine Temperatur unter 200°C herbeigeführt wird.

25. Gegenstand nach Anspruch 1, wobei die Zusammensetzung eine wirksame Menge eines Aktivators enthält, so daß sich die Farbe der Zusammensetzung irreversibel bei einer Temperatur T2 ändert, wobei T2 wenigstens 20°C unter der Temperatur T1 liegt, bei der der Farbstoff in Abwesenheit des Aktivators die Farbe ändert, wobei die Farbänderung über einen Temperaturbereich von 10°C im wesentlichen vollständig ist.

26. Gegenstand nach Anspruch 25, wobei die Zusammensetzung ca. 5 Gew.-% bis ca. 100 Gew.-% Folsäure als Farbstoff umfaßt.

27. Gegenstand nach Anspruch 25 oder 26, wobei der Aktivator eine Säure umfaßt, deren pK-Wert unter 4,2 liegt und die bei Raumtemperatur im Bindemittel fest ist.

28. Gegenstand nach Anspruch 27, wobei der Aktivator eine Carbonsäure ist.

29. Gegenstand nach Anspruch 28, wobei der Aktivator Weinsteinsäure ist.

30. Gegenstand nach Anspruch 25, wobei der Aktivator einen Säurevorläufer umfaßt, der, wenn er UV-Licht oder Wärme ausgesetzt ist, eine Säure bildet, deren pK-Wert unter 4,2 liegt.

31. Gegenstand nach Anspruch 30, wobei die Zusammensetzung ca. 5 Gew.-% bis ca. 80 Gew.-% Folsäure als den Farbstoff umfaßt.

32. Gegenstand nach Anspruch 25, wobei T2 unter 230°C liegt.

33. Gegenstand nach Anspruch 25, wobei die Zusammensetzung als Flüssigkeit aufgebracht wird.

34. Gegenstand nach Anspruch 25, wobei der Aktivator bei Raumtemperatur im Bindemittel fest ist.

35. Gegenstand nach Anspruch 34, wobei sowohl vor als auch nach dem Trocknen der Zusammensetzung der Aktivator bei Raumtemperatur im Bindemittel fest ist.

36. Gegenstand nach Anspruch 25, wobei die Zusammensetzung Aktivator in einer Menge von ca. 5 Gew.-% bis ca. 100 Gew.-% des Farbstoffs enthält.

37. Gegenstand nach Anspruch 30, wobei die Säure bei Raumtemperatur in der getrockneten Zusammensetzung fest ist.

38. Gegenstand nach Anspruch 27, wobei die Säure sich in der Zusammensetzung bei ca. T2 löst.

39. Gegenstand nach Anspruch 30, wobei die Säure eine organische Säure ist.

40. Gegenstand nach einem der Ansprüche 1—24, wobei die Farbänderung irreversibel ist.

41. Gegenstand nach Anspruch 1, wobei der warmschrumpfbare Träger Polyethylen umfaßt;

die getrocknete Temperaturanzeigezusammensetzung umfaßt:

eine wirksame Menge sowohl an Folsäure als dem Farbstoff als auch an Weinsteinsäure, so daß die Folsäure bei Erwärmen auf eine Temperatur $T_2$ die Farbe ändert, um in der Temperaturanzeigezusammensetzung eine erkennbare Farbänderung zu erzeugen; wobei

die Farbänderung irreversibel ist, die Temperatur $T_2$ unter 200°C liegt und die Farbänderung über einen Temperaturbereich von 10°C im wesentlichen vollständig ist.

42. Gegenstand nach Anspruch 41, umfassend ca. 5 Gew.-% bis ca. 40 Gew.-% Folsäure, bezogen auf das Gewicht der Zusammensetzung, und ca. 5 Gew.-% bis ca. 100 Gew.-% Weinsteinsäure, bezogen auf das Gewicht der Säure.

43. Verfahren zum Beschichten eines warmschrumpfbaren Trägers mit Thermochrom-Material, umfassend:

(1) Aufdrucken einer Temperaturanzeigezusammensetzung auf den Träger, wobei die Zusammensetzung umfaßt:

(a) ein UV-härtbares Bindemittel, das bei Härtung am Träger haften kann;

(b) einen Farbstoff, der bei Erwärmen der Zusammensetzung eine beträchtliche Farbänderung in der Zusammensetzung herbeiführt; und

(c) einen Initiator, der, wenn er UV-Strahlung ausgesetzt wird, eine Polymerisationsreaktion im Bindemittel auslöst;

(2) UV-Bestrahlen der Zusammensetzung, um das Bindemittel zu härten, während dem Farbstoff die Fähigkeit zur Farbänderung belassen wird.

## Revendications

1. Article, qui comprend:

un substrat thermorétrécissable portant, appliquée à sa surface, une composition indicatrice, de température, caractérisé en ce que la composition a été préparée par:

(a) application au substrat d'un liant durcissable par les rayons ultraviolets,

pourvu d'un colorant qui peut encore produire un changement de couleur notable dans la composition lorsque cette dernière est chauffée même après maturation du liant et

un initiateur dans le liant qui, par exposition à des rayons ultraviolets, déclenche une réaction de réticulation dans le liant,

(b) puis réticulation du liant durcissable par les rayons ultraviolets pour le faire adhérer au substrat.

2. Article suivant la revendication 1, dans lequel le substrat est un métal doué de mémoire, dont la configuration peut changeur par passage par sa température de transition.

3. Article suivant la revendication 1 ou 2, dans lequel le substrat est une matière plastique.

4. Article suivant la revendication 2 ou 3, dans lequel le substrat est creux.

5. Article suivant la revendication 4, dans lequel le substrat est un manchon.

6. Article suivant la revendication 5, dans lequel la composition indicatrice de température se trouve à la surface extérieure du manchon.

7. Article suivant la revendication 6, dans lequel le manchon porte à sa surface intérieure un agent d'étanchéité pouvant être activé par la chaleur.

8. Article suivant la revendication 7, dans lequel l'agent d'étanchéité est un adhésif fondant à chaud.

9. Article suivant la revendication 1, dans lequel le liant comprend un oligomère de résine du type acrylate.

10. Article suivant la revendication 9, dans lequel l'oligomère de résine du type acrylate est un mélange époxy aromatique/aliphatique du type acrylate.

11. Article suivant la revendication 10, dans lequel l'oligomère de résine du type acrylate est un uréthanne du type acrylate.

12. Article suivant la revendication 1, dans lequel le liant comprend un oligomère réactif et un diluant réactif.

13. Article suivant la revendication 12, dans lequel le diluant réactif est un ester de vinyle.

14. Article suivant la revendication 13, dans lequel le liant, après maturation, comprend principalement des homopolymères microdispersés dudit oligomère réactif et dudit diluant réactif.

15. Article suivant la revendication 12, dans lequel le liant tel qu'indiqué comprend 35 à 55% en poids dudit oligomère réactif et 65 à 45% dudit diluant réactif.

16. Article suivant la revendication 12, dans lequel l'oligomère réactif est un mélange époxy aromatique/aliphatique de type acrylate, et le diluant réactif est un ester de vinyle de l'acide versatique.

17. Article suivant la revendication 1, dans lequel le colorant est l'acide folique.

18. Article suivant la revendication 1, dans lequel le colorant est le carbonate de cuivre.

19. Article suivant la revendication 1, dans lequel l'initiateur engrendre des radicaux libres en présence de rayons ultraviolets.

20. Article suivant la revendication 1, dans lequel l'initiateur engendre un cation en présence de rayons ultraviolets.

21. Article suivant la revendication 1, dans lequel l'épaisseur de la composition est inférieure à 10 micromètres.

22. Article suivant la revendication 1, dans lequel le substrat porte la composition imprimée à sa surface.

23. Article suivant la revendication 1, dans lequel le changement de couleur est produit par chauffage de la composition à une température inférieure à 300°C.

24. Article suivant la revendication 1, dans lequel le changement de couleur est produit par chauffage de la composition à une température inférieure à 200°C.

25. Article suivant la revendication 1, dans lequel la composition contient une quantité efficace d'un activateur de manière que la couleur de la composition change irréversiblement à une température $T_2$, cette température $T_2$ étant inférieure d'au moins 20°C à la température $T_1$, à laquelle le colorant change de couleur en l'absence de l'activateur, le changement de couleur étant pratiquement accompli dans un intervalle de température de 10°C.

26. Article suivant la revendication 25, dans lequel la composition comprend environ 5 à environ 100% en poids d'acide folique comme colorant.

27. Article suivant la revendication 25 ou 26, dans lequel l'activateur comprend un acide qui a un pK inférieur à 4,2 et qui est solide dans le liant à la température ambiante.

28. Article suivant la revendication 22, dans lequel l'activateur est un acide carboxylique.

29. Article suivant la revendication 28, dans lequel l'activateur est l'acide tartrique.

30. Article suivant la revendication 25, dans lequel l'activateur comprend un précurseur d'acide qui, lorsqu'il est exposé à la lumière ultraviolette ou à la chaleur, forme un acide de pK inférieur à 4.2.

31. Article suivant la revendication 30, dans lequel la composition comprend environ 5 à environ 80% en poids d'acide folique comme colorant.

32. Article suivant la revendication 25, dans lequel la température T2 est inférieure à 230°C.

33. Article suivant la revendication 25, dans lequel la composition est appliquée sous forme d'un liquide.

34. Article suivant la revendication 25, dans lequel l'activateur est solide dans le liant à la température ambiante.

35. Article suivant la revendication 34, dans lequel l'activateur est solide dans le liant à la température ambiante avant et après séchage de la composition.

36. Article suivant la revendication 25, dans lequel la composition contient un activateur en une quantité d'environ 5 à environ 100% en poids du colorant.

37. Article suivant la revendication 30, dans lequel l'acide est solide dans la composition séchée à la température ambiante.

38. Article suivant la revendication 27, dans lequel l'acide se dissout dans la composition à la température T2 environ.

39. Article suivant la revendication 30 dans lequel l'acide est un acide organique.

40. Article suivant l'une quelconque des revendications 1 à 24, dans lequel le changement de couleur est irréversible.

41. Article suivant la revendication 1, dans lequel

le substrat thermorétrécissable comprend du polyéthylène;

la composition séchée indicatrice de température comprend:

une quantité efficace d'acide folique comme colorant et d'acide tartrique de manière que l'acide folique change de couleur lorsqu'il est chauffé à une température T2 en créant un changement de couleur détectable dans la composition indicatrice de température; en sorte que:

le changement de couleur est irréversible, la température T2 est inférieure à 200°C et le changement de couleur est pratiquement accompli dans un intervalle de température de 10°C.

42. Article suivant la revendication 41, comprenant environ 5 à environ 40% en poids d'acide folique sur la base du poids de la composition et environ 5 à environ 100% en poids d'acide tartrique sur la base du poids de l'acide.

43. Procédé de revêtement d'un substrat thermorétrécissable avec une matière thermochrome, qui consiste:

(1) à imprimer sur le substrat une composition indicatrice de température qui comprend:

(a) un liant durcissable par les rayons ultraviolets qui, en se réticulant, est capable d'adhérer au substrat;

(b) un colorant qui produit dans la composition un changement de couleur appréciable lorsque la composition est chauffée; et

(c) un initiateur qui, par exposition aux rayons ultraviolets, déclenche une réaction de polymérisation dans le liant;

(2) à soumettre la composition à des rayons ultraviolets pour faire durcir le liant, tout en laissant le colorant capable de subir ledit changement de couleur.